# EUROPÄISCHE PATENTANMELDUNG

(11) **EP 2 006 133 A2**
(43) Veröffentlichungstag der Anmeldung: **24.12.2008**
(21) Anmeldenummer: 08001476.4
(22) Anmeldetag: 26.01.2008
(51) Int. Cl.: B60J 1/20

(54) **Elektrisches Seitenfensterrollo**

(30) Priorität: 19.06.2007 DE 102007028585
(71) Anmelder: BOS GmbH & Co. KG, 73760 Ostfildern (DE)
(72) Erfinder: Lekar, Jan, 73262 Reichenbach (DE)
(74) Vertreter: Rüger, Barthelt & Abel Patentanwälte

(57) **Zusammenfassung**

Ein Seitenfensterrollo (20) für Vordertüren weist eine kurze Wickelwelle (27) auf, die im Bereich der Fensterhinterkante (6) im Türrahmen untergebracht ist. Über der Fensteroberkante (7) verläuft ein kurzes Stück Führungsschiene (24) zum Führen eines Gleiters, der mit der Spitze der Rollobahn (21) verbunden ist. Zum Antrieb der Rollobahn (21) ist ein elektrischer Antrieb (52) mit Seil (40) vorgesehen. Das Seil läuft als geschlossene Schleife um die Fensteröffnung herum.

## Beschreibung

Die tiefstehende Sonne sowohl bei Sonnenaufgang als auch bei Sonnenuntergang führt, je nach Ausrichtung des Fahrzeugs zur Sonne, zu Blendungen des Fahrers. Blendungen, die von vorne kommen, kann der Fahrer durch Verwendung der klassischen Sonnenblende, die oberhalb der Frontscheibe am Dachhimmel anscharniert ist verhindern, indem er bei Bedarf die Sonnenblender herunterklappt.

Ebenso störend ist ein seitlicher Sonneneinfall, weshalb es aus der Patentliteratur bekannt ist, hier schmale Sonnenrollos zu verwenden, die im oberen Bereich des vorderen Seitenfensters angeordnet sind. Zu diesen Rollos gehören Wickelwellen, die in der Fensterrahmenhinterkante, also in der Nähe der B-Säule, in der Tür gelagert sind. Auf der Wickelwelle ist ein streifenförmiges Rollo aufgewickelt, das von der Wickelwelle abgezogen wird und dann den oberen Bereich ca. 20% der Höhe des Fensters abschattet.

Das Aufwickeln der Rollobahn auf die Wickelwelle geschieht mit Hilfe eines Federmotors, während das Abwickeln von Hand geschieht. Das abgewickelte Rollo wird mit der vorauseilenden Kante oder Spitze an der entsprechenden gegenüberliegenden Stelle am Fensterrahmen nahe der A-Säule befestigt.

Je nach Fahrzeugtyp, ob zweitürig oder viertürig, liegt die Fensterrahmenhinterkante bei vorderen Seitenfenstern mehr oder weniger weit hinter der Schulter des Fahrers. Dementsprechend schwer tut sich der Fahrer, wenn er die Rollobahn erfassen und ausziehen soll.

Andererseits ist der Platz zur Unterbringung von Antrieben sehr beschränkt, denn die Breite des Fensterrahmens soll durch die Antriebe nicht vergrößert werden.

Ausgehend hiervon ist es Aufgabe der Erfindung ein neuartiges elektrisch betriebenes Seitenfensterrollo für vordere Seitenscheiben zu schaffen.

Die Aufgabe wird erfindungsgemäß mit einem Seitenfensterrollo mit den Merkmalen des Anspruches 1 gelöst.

Bei dem neuen Seitenfensterrollos ist die Wickelwelle im oberen Bereich des hinteren Fensterrahmensrands drehbar gelagert. Die Länge der Wickelwelle ist kürzer als der betreffende im Wesentlichen vertikal verlaufende Abschnitt.

An der Wickelwelle ist die Rollobahn mit einer Kante befestigt. Sie weist ein von der Wickelwelle abliegendes freies Ende oder eine Spitze auf. Längs der oberen Fensterrahmenkante verläuft die Führungsschiene, in der das freie Ende der Rollobahn geführt ist.

Ein Federmotor dient zum Vorspannen der Wickelwelle im Sinne eines Aufwickelns der Rollobahn auf die Wickelwelle.

Um das Fenster herum führt ein Seil, das zumindest abschnittsweise, in dem Fensterrahmen verläuft und das mit dem freien Ende der Rollbahn befestigt ist. Dem Seil ist ein elektrischer Antriebsmotor zugeordnet, um das Seil in Bewegung zu setzen.

Die Verwendung eines um das Fenster herumlaufenden Seils hat den Vorteil, dass, unabhängig von der Bewegungsrichtung, lediglich Zugkräfte im Seil auftreten, die vom Elektromotor aufgebracht werden müssen. Würde das Seil nicht um das Fenster herumlaufen, dann könnte mit Hilfe des Seils lediglich die Ausfahrbewegung erreicht werden, während das Einfahren ausschließlich durch den Federmotor erfolgt, d.h. der Federmotor müsste auch die Reibungskraft, der das Seil unterliegt, überwinden. Bei der getroffenen erfindungsgemäßen Anordnung dagegen braucht der Federmotor lediglich die Kraft aufzubringen, die notwendig ist, um das Rollo aufzuwickeln bzw. im Betrieb hinreichend gespannt zu halten. Die Reibungskraft, die beim Rücklaufen des Rollos das Seil erfährt, wird von dem betreffenden Trum bzw Leertrum des Seils zum Antriebsmotor übertragen.

Das Seil hat den weiteren Vorteil, dass es ohne große Probleme um kleine Krümmungsradien umgelenkt werden kann, wie sie beispielsweise in der oberen Ecke des Fensterrahmens auftreten.

Würde jenes Leertrum der erfindungsgemäßen Seilanordnung fehlen, das von der Rollobahnspitze in Richtung zur Wickelwelle und von dort zum Motor zurückläuft, so müsste das Arbeitstrum durch ein drucksteifes Glied ersetzt werden, wenn die auftretende Reibung durch den Motor aufgebracht werden soll. Drucksteife Glieder zum Antrieb von Rollos sind bekannt, erzeugen jedoch verhältnismäßig viel Reibung. Im Falle eines kleinen Seitenfensterrollos ist die dabei auftretende Reibungskraft unverhältnismäßig hoch, insbesondere dann, wenn wegen der sonstigen Einbauten in der Tür, wie Spiegel etc., kleine Umlenkradien erforderlich werden.

Die erfindungsgemäße Anordnung ist somit relativ reibungsarm, und zwar auch aus der Sicht des Federmotors.

Die Länge der Wickelwelle bemisst sich nach der zulässigen Höhe der Unterkante der ausgezogenen Rollobahn und liegt zwischen 20% und 40% der Länge der zumindest angenähert vertikal verlaufenden hinteren Fensterseitenkante.

Die Rollobahn kann angenähert die Gestalt eines spitzen Dreiecks haben.

Die Rollobahn kann an ihrem von der Wickewelle abliegenden Ende mit einer Führungseinrichtung versehen sein, die dazu eingerichtet ist, in der Führungsschiene zu laufen. Es kann sich hierbei um eine Art Gleiter handeln, der fest mit dem Seil verbunden ist.

Damit das Seil unabhängig von Temperatur und Feuchteeinwirkung immer hinreichend gespannt bleibt und kein Leerweg auftritt, kann es von Vorteil sein, wenn die Enden des Seils über eine Zugfeder miteinander verbunden sind.

Eine andere Möglichkeit kann darin bestehen, die Enden des Seils an einer Seilscheibe zu befestigen, wobei wiederum ein Ende federvorgespannt ist.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" beziehen sich auf die normale Einbaulage bzw. Terminologie bei Kraftfahrzeugen.
- Fig. 1: zeigt eine linke Kraftfahrzeugtür in einer Draufsicht auf die Innenseite.
- Fig. 2: zeigt die Kraftfahrzeugtür nach Fig., mit weggenommener Innenverkleidung unter Veranschaulichung des Seitenfensterrollo in Verbindung mit dem Antrieb.
- Fig. 3: zeigt einen Abschnitt der Führungsschiene in Verbindung mit dem Gleiter, in einer perspektivischen Ausschnittsdarstellung.
- Fig. 4: zeigt eine Ausführungsform für die Anlenkung des Seils an der Seilscheibe.

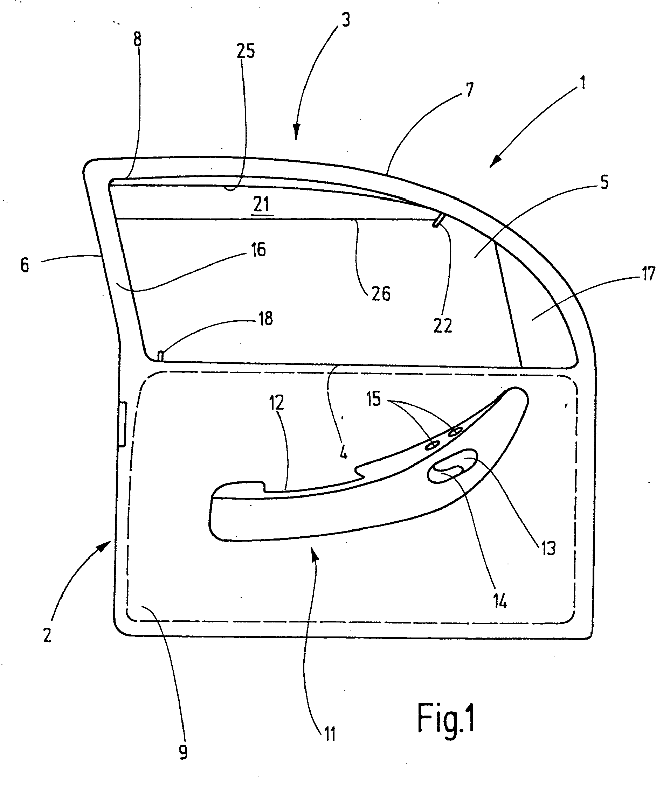

Fig. 1 zeigt eine Ansicht auf die Innenseite einer linken Vordertür 1 eines Kraftfahrzeugs. Zu erkennen ist ein unterer Türkorpus 2 über den sich bogenförmig ein Fensterrahmen 3 spannt. Der Fensterrahmen 3 begrenzt, zusammen mit einer Oberkante 4 des Korpus 2, eine Fensteröffnung 5. Der Rahmen 3 gliedert sich in ein hinteres Rahmenteil 6 und ein oberes Rahmenteil 7, die bei 8 mit einer Innenecke ineinander übergehen.

Der hintere Rahmenabschnitt 6 führt von der Innenecke 8 zu der Oberkante 4 des Korpus 2 und mündet dort in den Korpus 2 ein.

Der obere Rahmenabschnitt 7 führt von der Innenecke 8 zur Vorderkante der Tür und verläuft im Bogen, bevor er ebenfalls in den Korpus 2 einmündet.

Wenn hier von Rahmen bzw. Korpus die Rede ist, sind damit die Hohlgebilde an sich bezeichnet, in denen die einzelnen Türeinbauteile wie Lautsprecher, Schlösser, Fensterheber, Scheiben, Fensterschienen und dergleichen, gelagert und geführt sind, ohne dass im weiteren zwischen der tragende Blechkarosserie und einer eventuell vorhandenen Innenverkleidung differenziert wird. Es ist für den Fachmann klar, dass sowohl der Fensterrahmen als auch der Korpus hohl gebildet sind und im wesentlichen aus einer Blechaußenhaut und einer Innenverkleidung 9 bestehen, zwischen denen eine Tragschale angeordnet ist.

Den weit überwiegenden Teil der Sichtseite des Korpus 2 bildet dessen Innenverkleidung 9, auf der eine Türgriffanordnung 11 befestigt ist. Die Türgriffanordnung 11 weist eine Griffmulde 12, einen in einer Mulde 13 schwenkbar gelagerten Schlossbetätigungshebel 14 sowie Schalter 15 auf, mit denen Fensterscheiben, Spiegel, Sitze und dergleichen verstellt oder betätigt werden können.

Eine weitere streifenförmige Innenverkleidung 16 ist auf der Innenseite des hinteren Rahmenabschnitts 6 zu erkennen.

Im Bereich des vorderen Teils des Fensterausschnitts 5 befindet sich eine Füllplatte 17, an der in bekannter Weise auf der Außenseite ein Außenspiegel sitzt und in der eine Führungsschiene für eine nicht weiter zu erkennende Fensterscheibe angeordnet ist. Eine korrespondierende Führungsschiene befindet sich in dem hinteren Rahmenabschnitt 6. Die Führungsschienen laufen bis in den Korpus 2 hinein.

Schließlich ist auf der Oberseite 4 des Korpus 2 ein Zapfen 18 zu erkennen, der als Tür-Verriegelungsknopf dient und den Schließzustand des Türschlosses anzeigt.

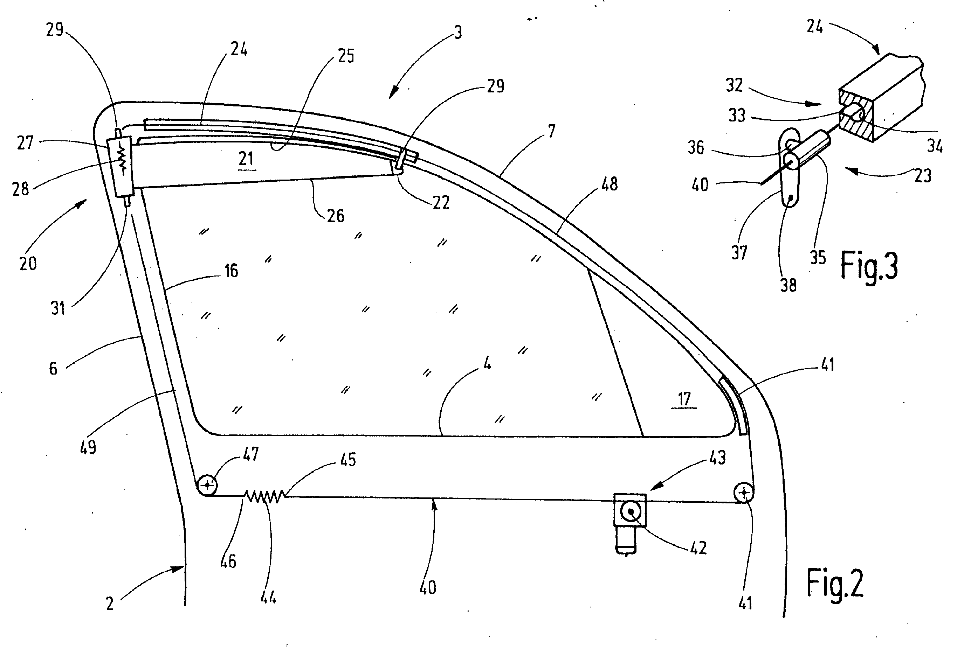

Die solchermaßen aufgebaute Vordertür 1 ist mit einem Seitenfensterrollo 20 versehen (Fig. 2), dessen Rollobahn 21 in Fig. 1 ausgezogen gezeigt ist. Die Rollobahn 21 hat, wie zu erkennen ist, einen etwa dreieckförmigen Zuschnitt, wobei sich das breite Ende bei dem hinteren Fensterrahmenabschnitt 6 befindet, während die Spitze 22 an einem Gleiter 23 angebunden ist, der in einer Führungsschiene 24 läuft.

Die Rollobahn 21 wird von zwei Kanten 25 und 26 begrenzt, von denen, zumindest die Kante 26, gerade ist, während die Kante 25 angenähert dem Verlauf der Unterkante des Rahmenabschnitts 7 folgt und nahezu gerade oder ebenfalls völlig gerade verläuft.

Im aufgespannten Zustand, wie er in Fig. 1 gezeigt ist, erstreckt sich die Rollobahn 21 neben der Innenseite der Fensterscheibe knapp unterhalb des etwa horizontal verlaufenden Abschnitts des oberen Fensterrahmenabschnitts 7, wobei zwischen dessen Unterkante und der Rollobahnkante 25 praktisch nur ein sehr geringer Spalt verbleibt. Die Unterkante 26 läuft etwa parallel zu der Oberkante 4 des Korpus 2, und zwar in einem solchen Abstand, dass der nach den Gestaltungsvorschriften zulässige Bereich verbleibt, durch den eine ungehinderte Sicht nach außen zwingend vorgeschrieben ist.

Die Rollobahn 21 wird durch einen Schlitz ausgezogen, der sich neben der Innenseite der Fensterscheibe befindet und der von der Innenecke 8 ausgeht. Der Schlitz ist in der Innenverkleidung 6 als Ausnehmung ausgebildet.

Mit ihrem von der Spitze 22 abliegenden Ende ist die Rollobahn 21 an einer Wickelwelle 26 befestigt, die in dem hinteren Rahmenabschnitt 6 zwischen der Blechaußenhaut und der darauf sitzenden Innenverkleidung drehbar gelagert ist. Die Wickelwelle 26 hat eine kegelstumpfförmige Gestalt, wobei in der Fig. 2 der Kegelwinkel übertrieben stark gezeigt ist. Mit Hilfe der kegelförmigen Wickelwellengestalt soll erreicht werden, dass die Spitze 22 der Rollobahn 21 dem bogenförmigen Verlauf des oberen Fensterrahmenabschnitts 6 folgen kann.

Im Inneren der Wickelwelle 27 befindet sich ein Federmotor 28, der einends drehfest mit einem Lagerzapfen 29 und andernends mit der Wickelwelle 27 verbunden ist. Mit Hilfe des Federmotors 28 wird die Wickelwelle 27 im Sinne des Aufwickelns der Rollobahn 21 vorgespannt.

Mit dem Lagerzapfen 29 korrespondiert ein unterer Lagerzapfen 31, der drehbar in nicht weiter gezeigten Lagerböcken aufgenommen ist.

Die bereits erwähnte Führungsschiene 24 ist in Fig. 3 abschnittsweise gezeigt. Wie zu erkennen ist, enthält sie eine Führungsnut 32, die sich aus einem Nutenschlitz 33 und einer Nutenkammer 34 zusammensetzt. Die Weite des Schlitzes 33 ist kleiner als der Durchmesser der etwa kreisförmigen Nutenkammer 34. Es entsteht eine hinterschnittene Führungsnut 32.

Die Führungsschiene 24 beginnt in der Nähe der Wickelwelle 27 und erstreckt sich knapp über jenen Punkt hinaus, bis zu dem die Spitze 22 gelangt, wenn die Rollobahn 21 vollständig ausgefahren ist. Er liegt auf der Höhe des unteren Endes der Wickelwelle (27).

Die Befestigungsmittel zum Anbringen der Führungsschiene 24 an der Blechaußenhaut sind aus Darstellungsgründen nicht weiter gezeigt. Dem Fachmann ist bekannt, wie eine solche Befestigung zu erfolgen hat.

Neben der Führungsschiene 24 aus Fig. 3 ist der Gleiter 23 gezeigt. Wie zu erkennen ist gehört zu ihm ein Gleitergrundkörper 35, der die Gestalt eines kurzen Zylinderstücks hat, dass dazu angepasst ist, durch die Nutenkammer 34 klemmfrei in Längsrichtung zu gleiten. Anstelle eines Zylinderstücks kann auch ein hantelförmiges Teil verwendet werden.

Etwa in der Mitte des Gleitergrundkörpers 35 ragt ein kurzer Zapfen 36 vor, an dem eine Lasche 37 befestigt ist. Der Durchmesser des Zapfens 36 entspricht der Schlitzweite des Nutenschlitzes 33 und seine Länge ist so bemessen, dass die Lasche 37 außerhalb der Führungsschiene 24 laufen kann. Die Lasche 27 führt, wie gezeigt, von dem Zapfen oder Halsteil 36 nach unten und enthält im unteren Ende eine Befestigungsöffnung 38, an der die Spitze 22 der Rollobahn 21 beispielsweise mit einem Niet befestigt ist.

Um den Gleiter 23 längs der Führungsschiene 24 zu bewegen, ist ein flexibles Seil 40 vorgesehen, das mit dem Gleitergrundkörper 35 unverschieblich verbunden ist. Das Seil 40 tritt beispielsweise am rechten Ende aus der Nutenkammer 34 der Führungsschiene 24 aus und läuft von dort über nicht weiter gezeigte Führungselemente zu einem Führungselement 41 im Bereich der vorderen unteren Ecke des Seitenfensters 5. Die im Bereich zwischen dem Führungsstück 41 und dem benachbarten Ende der Führungsschiene 24 liegenden Führungsstück können eine ähnliche Gestalt haben.

Unterhalb der Fensterunterkante 6 und damit innerhalb des Türkorpus 2 läuft das Seil 40 um eine drehbar gelagerte Umlenkrolle 41 zu einer Seilscheibe 42 einer elektrischen Antriebseinrichtung 43.

Von der Antriebseinrichtung 43 führt das Seil 40 zu einer Zug-.oder Ausgleichsfeder 44, an der es mit einem Ende 45 befestigt ist. Das Seil 40 weist ein zweites Ende 46 auf, das an dem anderen Ende der Zug- oder Ausgleichsfeder 44 befestigt ist. Von diesem Ende 46 führt das Seil 40 zu einer Umlenkrolle 47, die sich unterhalb der hinteren unteren Innenecke des Fensters 5 innerhalb des Türkorpus 2 befindet. Von hier aus läuft das Zugseil 40 durch den hinteren Rahmenteil 6 nach oben in Richtung zu der Wickelwelle 27 und ist dort oberhalb der Innenecke 8 erneut, entweder durch eine nicht weiter erkennbare Umlenkscheibe oder ein statisches Gleitstück, in Richtung auf das linke bzw. hintere Ende der Führungsschiene 24 umgelenkt. Hier tritt das Seil 40 wiederum in die Führungskammer 34 ein.

Wie zu erkennen ist, umgibt das Seil 40 vollständig das Seitenfenster 5 als geschlossener Ring. Abgesehen von eventuellen Unterbrechungen durch die Zugfeder 44 oder Befestigungspunkten an der Seilscheibe 42.

Die Seilscheibe 42 teilt das Seil 40 funktional in ein Arbeitstrum 48 und ein Leertrum 49. Das Arbeitstrum 48 erstreckt sich zwischen dem Gleiter 23 und der Seilscheibe 42, während das Leertrum 49, das die Ausgleichsfeder 44 enthält, zwischen der Seilscheibe 42 und ebenfalls dem Gleiter 23 liegt, jedoch in jenem Bereich in dem funktionsmäßig das Seil 40 auf Zug beansprucht wird, wenn die Rollobahn 21 eingefahren wird. Die Funktion des Fensterrollos 20 wird weiter unten noch im Einzelnen erläutert.

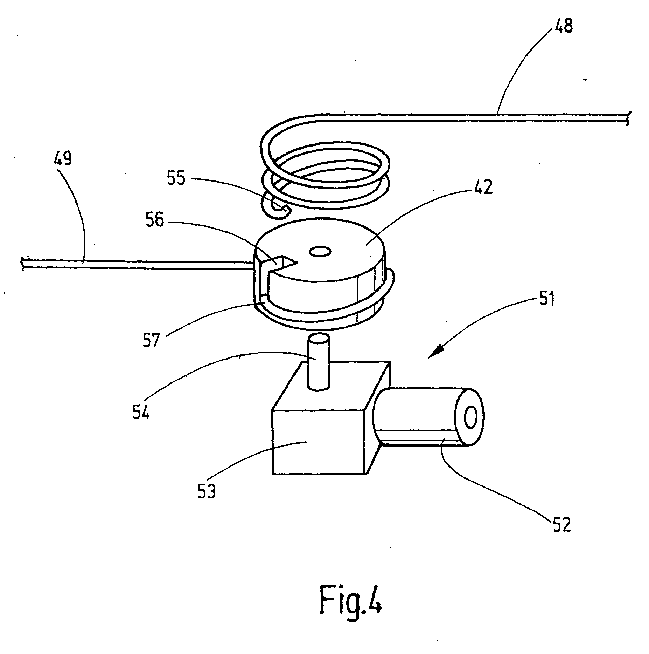

Fig. 4 zeigt die schlupffreie Verbindung zwischen der Seilscheibe 42 und dem Seil 40,

Zu der Antriebseinrichtung 43 gehört ein Getriebemotor 51 mit einem permanent erregten Gleitstrommotor 52, der ein Getriebe 53 antreibt. Auf einer Ausgangswelle 54 des Getriebes 53 sitzt die Seilscheibe 42 drehfest. Der von rechts kommende und das Arbeitstrum 48 bildende Abschnitt des Seils 40 liegt in der gezeigten Betriebsstellung in mehreren Umgängen um den Umfang der Seilscheibe 42 herum und ist mit seinem Ende 55 in einer Befestigungsnut 56 der Seilscheibe 42 verankert. In derselben Befestigungsnut 56 liegt das betreffende Ende 57 des Leertrums 49. Da die Rollobahn 21 ausgefahren ist, liegt das Leertrum 49 nur mit ca. einer Windung auf der Seilscheibe 42 auf, während das Leertrum 48 in mehreren Windungen aufgewickelt ist, entsprechend der Länge der ausgezogenen Rollobahn 21.

Anstelle der gezeigten Verbindung des Seils 40 mit der Seilscheibe 42 ist es auch möglich die Seilscheibe 42 nach Art einer Winsch auszubilden, bei der das Seil 40 ungeschnitten in zwei oder drei Umgängen um die Seilscheibe 42 umläuft. Hierbei ist die Seilscheibe mit einer konkaven Nut versehen um den bestehenden Wickel aus zwei oder drei Umgängen zentriert auf der Seilscheibe 42 zu halten und zu verhindern, dass er sich schraubenförmig in Axialrichtung bewegt.

Die Funktion der gezeigten Anordnung ist wie folgt:
Im eingefahrenen Zustand ist die Rollobahn 21 unter der Wirkung des Federmotors 28 nahezu vollständig, auf der Wickelwelle 27 aufgewickelt. In dieser Position steht der Gleiter 23 mit der daran befestigten Rollobahnspitze 22 unmittelbar neben der Innenkante 16 des hinteren Rahmenabschnittes 6. Das Seil 40 wird über die gesamte Länge durch die Ausgleichsfeder 44 gespannt gehalten. Die Feder 44 steht bezogen auf die Darstellung in Fig. 2 rechts in der Nähe der Antriebseinrichtung 43.

Da die Antriebseinrichtung 43 selbsthemmend ist, ist das Rollo 20 in der eingefahrenen Stellung blockiert. Die Kraft der Ausgleichsfeder 44 ist bestrebt, sowohl das Arbeitstrum als auch das Leertrum 48, 49 gespannt zu halten, d.h. das Ende 46 in Richtung zu der Seilscheibe 42 zu ziehen.

Wenn der Benutzer, ausgehend von dieser angenommenen Stellung, das Rollo 20 ausfahren will, so wie dies in Fig. 2 gezeigt ist, setzt er über entsprechende Schalter beispielsweise die Schalter 15 in der Armlehne 11, die Antriebseinrichtung 43 in der entsprechenden Drehrichtung in Gang. Die Seilscheibe 42 zieht an dem Arbeitstrum 48. Über das Arbeitstrum 48 wird die Zugkraft der Antriebseinrichtung 43 auf den Gleiter 23 übertragen, der von dem hinteren, d.h. in Fig. 2 linken Ende der Führungsschiene 24 in Richtung auf das vordere Ende gezogen wird. Der Gleiter zieht dabei gleichzeitig die mit ihm verbundene Spitze 22 der Rollobahn 21 mit sich mit und zieht die Rollobahn 21 von der Wickelwelle 27 gegen die Wirkung des Federmotors 28 ab. Gleichzeitig bringt das Arbeitstrum 48 die Zugkraft auf, um das Leertrum 49 über die entsprechenden Gleitstellen, beispielsweise in der gekrümmten Führungsschiene 24, zu bewegen.

Zum Einfahren des Rollos 20 wird die Antriebseinrichtung 43 mit der umgekehrten Drehrichtung in Gang gesetzt, womit nunmehr die Zugkraft über das Leertrum 49 läuft, das jedoch nur dazu benötigt wird um die Reibung zu überwinden, die das Arbeitstrum 48 erfährt. Über das Leertrum 49 muss keine Kraft übertragen werden um die Rollobahn 21 aufzuwickeln. Diese Arbeit übernimmt der Federmotor 28, der hierfür die notwendige Kraft liefert. Aus diesem Grunde liegt die Ausgleichsfeder 44 auch im Bereich des Leertrums 49 und nicht im Bereich des Arbeitstrums 48, um zu verhindern, dass über die Zugfeder 44 die Kraft übertragen werden muss um die Rollobahn 21 gegen die Wirkung des Federmotors 28 von der Wickelwelle 27 abzuziehen.

Bei der Gleitbewegung läuft der Gleiter 23 mit seinem Gleitergrundkörper 25 durch die Nutenkammer 34. In dieser ist er weitgehend kippgesichert geführt bezüglich seiner Querachse. Die Kippbewegung bezüglich der Längsachse wird durch den Zapfen 36 verhindert, der in dem Nutenschlitz 33 läuft. Die Seilkraft kann damit unmittelbar auf die Rollobahn 21 übertragen werden, deren Spitze 22 von dem Gleiter 23 getragen wird, d.h. das Gewicht wird über den Gleiter 23 in die Führungsschiene 24 eingeleitet.

Ein Seitenfensterrollo für Vordertüren weist eine kurze Wickelwelle auf, die im Bereich der Fensterhinterkante im Türrahmen untergebracht ist. Über der Fensteroberkante verläuft ein kurzes Stück Führungsschiene zum Führen eines Gleiters, der mit der Spitze der Rollobahn verbunden ist. Zum Antrieb der Rollobahn ist ein elektrischer Antrieb mit Seil vorgesehen. Das Seil läuft als geschlossene Schleife um die Fensteröffnung herum.

## Patentansprüche

1. Seitenfensterrollo (20) von Kraftfahrzeugen, bei denen das Seitenfenster (5) von einem Fensterrahmen (3) umgeben ist, der einen oben liegenden Abschnitt (7), einen unten liegenden Abschnitt (4) und seitlich liegende Abschnitte (6,7) aufweist,
mit einer Wickelwelle (27), die in einem der seitlich liegenden Abschnitte (6) des Fensterrahmens (3) drehbar gelagert ist und deren Länge kürzer ist als der betreffende Abschnitt (6),
mit einer Rollobahn (21), die mit einer Kante an der Wickelwelle (27) befestigt ist und die ein von der Wickelwelle (27) abliegendes freies Ende (22) aufweist, mit einer Führungsschiene (24), mittels derer das freie Ende (22) der Rollobahn (21) geführt ist,
mit einem Federmotor (28) zum Vorspannen der Wickelwelle (27) im Sinne eines Aufwickelns der Rollobahn (21) auf die Wickelwelle (27),
mit einem um das Fenster (5) herum führenden Seil (40), das zumindest abschnittsweise in dem Fensterrahmen (3) verläuft und das mit dem freien Ende (22) der Rollobahn (21) gekuppelt ist, und
mit einem elektrischen Antriebsmotor (52), der mit dem Seil (40) gekuppelt ist.

2. Seitenfensterrollo nach Anspruch 1, **dadurch gekennzeichnet, dass** die Länge der Wickelwelle (27) zwischen 20% und 40% die Länge der vertikalen Fensterseitenkante (6) beträgt.

3. Seitenfensterrollo nach Anspruch 1, **dadurch gekennzeichnet, dass** die Rollobahn (21) angenähert die Gestalt eines spitzen Dreiecks aufweist.

4. Seitenfensterrollo nach Anspruch 1, **dadurch gekennzeichnet, dass** das Seitenfenster (5) ein vorderes Seitenfenster eines Kraftfahrzeugs ist.

5. Seitenfensterrollo nach Anspruch 1, **dadurch gekennzeichnet, dass** die Rollobahn (21) an ihrem von der Wickelwelle (27) abliegenden Ende (22) mit einer Führungseinrichtung (23) versehen ist, die dazu eingerichtet ist, in der Führungsschiene (24) zu laufen.

6. Seitenfensterrollo nach Anspruch 11, **dadurch gekennzeichnet, dass** dem Seil (40) eine Spanneinrichtung (44) zugeordnet ist.

7. Seitenfensterrollo nach Anspruch 11, **dadurch gekennzeichnet, dass** Enden (45,46) des Seils (40) über eine Zugfeder 44miteinander verbunden sind.

8. Seitenfensterrollo nach Anspruch 11, **dadurch gekennzeichnet, dass** Enden des Seils (40) an einer Seilscheibe (42) befestigt sind.
